# EUROPEAN PATENT SPECIFICATION

(11) **EP 1 141 753 B1**
(45) Date of publication and mention of the grant of the patent: **06.10.2010**
(21) Application number: 99963972.7
(22) Date of filing: 03.12.1999
(51) Int. Cl.: G02B 6/02, C03B 37/00, G02B 6/255, G01Q 70/18

(54) **METHOD FOR PRODUCING OPTICAL FIBERS WITH SUBWAVELENGTH APERTURES**
VERFAHREN ZUR HERSTELLUNG VON OPTISCHEN FASERN MIT SUBWELLENLÄNGEN-APERTUR
PROCEDE DE PRODUCTION DES FIBRES OPTIQUES A OUVERTURES SUB-LONGUEURS D'ONDE

(30) Priority: 06.12.1998 IL 12740498
(43) Date of publication of application: 10.10.2001
(73) Proprietor: Lewis, Aaron, Jerusalem 93707 (IL)
(72) Inventor: Lewis, Aaron, Jerusalem 93707 (IL)
(74) Representative: Dreiss
(86) International application number: PCT/US1999/027913
(87) International publication number: WO 2000/034810

(56) References cited:
- DE-A1- 19 822 871
- US-A- 4 917 462
- US-A- 4 932 989
- US-A- 5 361 314
- US-A- 5 485 536
- US-A- 5 515 719
- US-A- 5 677 978
- "Far field characterization of diffracting circular apertures" APPLIED PHYSICS LETTERS, AMERICAN INSTITUTE OF PHYSICS. NEW YORK, US, vol. 67, no. 23, 4 December 1995 (1995-12-04), pages 3408-3410, XP012014186 ISSN: 0003-6951
- KOBAYASHI K ET AL: "Polarization-dependent contrast in near-field optical microscopy" JOURNAL OF VACUUM SCIENCE & TECHNOLOGY B (MICROELECTRONICS AND NANOMETER STRUCTURES) AIP FOR AMERICAN VACUUM SOC USA, vol. 15, no. 6, November 1997 (1997-11), pages 1966-1970, XP002328958 ISSN: 0734-211X
- LIEBERMAN K ET AL: "Multifunctional, micropipette based force cantilevers for scanned probe microscopy" APPLIED PHYSICS LETTERS USA, vol. 65, no. 5, 1 August 1994 (1994-08-01), pages 648-650, XP002329223 ISSN: 0003-6951

## Description

### I Field of the Invention

The need for subwavelength apertures spans many areas of science and technology from subwavelength optical imaging and nanofabrication with near field optics to electrical measurements of cellular biology with subwavelength apertures in micropipettes. The field of this invention is a method for making such a subwavelength aperture at the tip of an optical fiber that also behaves as a lens.

### II Background of the Invention

One reason for developing new methods to produce subwavelength apertures is that the field of near-field optics is one of the fastest growing areas of science and technology today. Previously, the most successful method for creating near-field optical apertures was the use of techniques to taper glass in order to provide a subwavelength region at the tip of the tapered glass structure which could be coated with metal in order to produce a subwavelength aperture at the tip. [A. Harootunian, E. Betzig, M.S. Isaacson, and A. Lewis; Appl. Phys. Lett. 49,674 (1986); A. Lewis, M. Isaacson, E. Betzig, and A. Harootunian, United States Patent Number 4,917,462; Issued: April 17, 1990.]. These methods can be used to either produce a tapered micropipette or can be used to produce a tapered fiber optic element that can then be coated with metal to produce a subwavelength aperture. One aspect of these methods that can be improved is the taper angle of the tip and the core to cladding ratio when an optical fiber is employed. This is necessary for high light transmission since it is important that the light beam, as it progresses through such a tapered structure, traverses the smallest region of subwavelength dimensions while remaining as much as possible in the core of the fiber. There have been generally two procedures to improve this characteristic of near-field optical elements. One procedure has depended on etching of the fiber tip [Jiang S. Ohsawa, H. Yamada, K. Pangaribuan, T. Chtsu, M. Imai, K. and Ikai. A.; Jpn. J. Appl. Phys. 31,2282 (1992); S.J. Bukofsky and R.D. Grober. Appl. Phys. Lett. 71,2749 (1997)]. A second approach has to been to use an amended version of the earlier pulling technology [Galina Fish, Sophin Kokotov, Edward Khachatryan, Andrey Ignatov, Rimma Glazer, Anatoly Komissar, Yuri Haifez, Alina Strinkovsky, Aaron Lewis and Klony Lieberman; Israel Patent Application Serial Number:120181: Filed: February 9, 1997, PCT filed February 8, 1998].

### III State of Prior Art

Document "Far field characterization of diffracting circular apertures" APPLIED PHYSICS LETTERS, AMERICAN INSTITUTE OF PHYSICS, NEW YORK, US, vol. 67, no. 23, 4 December 1995, pages 3408-3410, ISSN: 0003-6951 discloses a far-field optical device in which an aperture is formed at the apex of a metal coated tapered optical fiber.

Document US-A-5 515 719 discloses an atomic force microscope using a soft cantilever with an asperity as a probe. However, the use of a precise process for formation of an asperity is not taught in this document.

### IV Summary of the Invention

The invention is a method to produce a subwavelength aperture in the tip of a tapered or untapered optical fiber according to claim 1.

### V Brief Description of the Drawings

The foregoing and additional object features and advantages will become apparent to those of skill in the art from the following detailed description of preferred embodiments, taken with the accompanying drawings, in which:
Figs. 1A, 1B and 1C are diagrammatic illustrations of the placement of a laser beam relative to glass structures for producing combined subwavelength apertures with lenses;
Figs. 2A and 2B are diagrammatic illustrations of an optical fiber (in partial cross-section) and a micropipette respectively, after treatment by a laser; and
Fig. 3 is a diagrammatic illustration of a cantilevered glass structure incorporating the invention.

### VI Description of the Invention

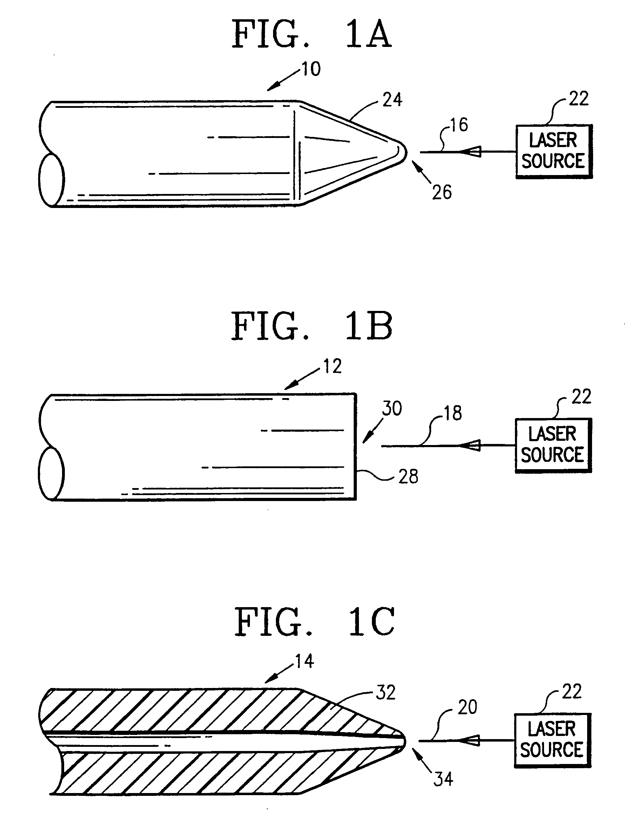

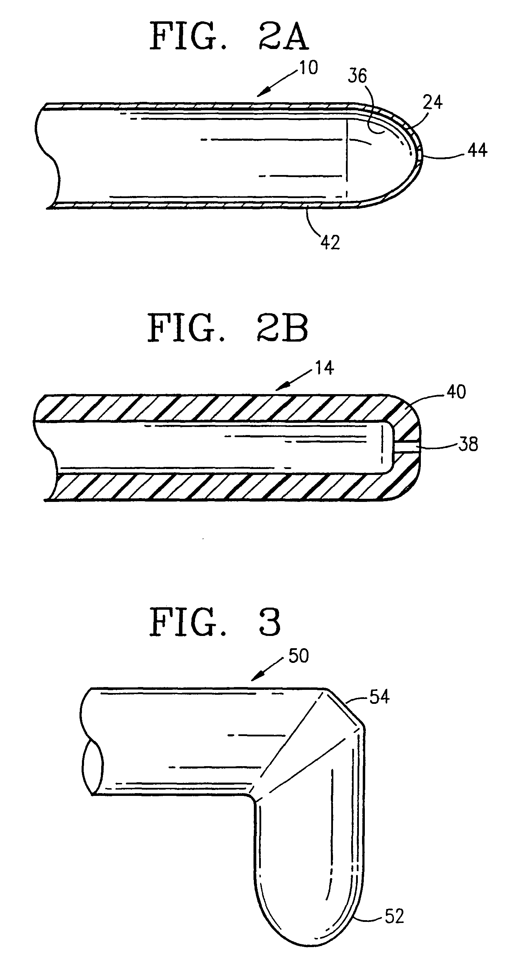

The inventive method may be used to produce a device in which there is both a lens and a subwavelength (tens of nanometers or selected dimensions around these dimensions) aperture at the tip of an optical fiber. In order to accomplish this in one embodiment a glass structure 10, which may be an optical fiber tapered by standard Harootunian and Lewis methodology or by etching, as illustrated in Figure 1A, or a fiber structure 12 in Fig. 1B, formed with tapering or etching, or in another embodiment which does not form part of the invention a similar combination for a micropipette 14 (Fig. 1C), is placed in front of a laser beam 16 (Figure 1A), laser beam 18 (Fig. 1B), or laser beam 20 (Fig. 1C) produced by a carbon dioxide laser 22, or some other appropriate laser beam. The laser beam and the corresponding glass structure are aligned on one axis with, for example, the tip 24 of the tapered structure 10 in the focus 26 of the laser beam 16. Similarly, beam 18 is aligned with the end 28 of structure 12 at focus 30 and beam 20 is aligned with the tip 32 of structure 14 at focus 34. Then the laser beam is turned on for a few seconds in order to melt the tip 24 into a lens 36 if it is an optical fiber 10 or 12 (Figure 2A) or into a structure that has a small opening 38 with large (thick) walls 40 if it is a micropipette 14 (Figure 2B). In a version of the method that does not form part of the invention, the resulting optical fiber device 10 (or 12) is then coated with metal 42 such that an aperture 44 is left opened at the tip. In accordance with the invention, the device 10 is completely coated and then a focused ion beam or a laser such as the femtosecond laser 22 is used to make the aperture. In the case of the micropipette 14 (Figure 2B) the device can be left uncoated.

With both micropipettes and optical fibers, asperities can either be grown on the tip electrochemically or formed with such techniques as ion or electron beams to produce a fine tip on the end of structures 10, 12 or 14 for atomic force microscopy. In addition, the laser beam could also be used to heat the optical fiber or the micropipette to form a curved cantilevered device 50 (Fig. 3), having a tip 52 incorporating a lens such as lens 36 (Fig. 2A), as has been accomplished previously (K. Lieberman and A. Lewis, "Bent Probe Microscopy", United States Patent Number: 5,677,978; Issued: October 14, 1997). The laser beam can also be used to put a flat surface 54 on the curved cantilever to provide a good reflecting surface for atomic force microscopy, although these are simply additions that this invention could also work with. In other words these alterations in the structure are compatible with this invention but the invention can be employed with or without them.

### VII Advantages over Prior Art

The above-described structures can act both as lenses and subwavelength apertures and can also behave in a hybrid fashion that has never been seen before. Specifically, it has been observed that as the distance is increased between a surface and the tip of the aperture there can be, in fact, an increase in the resolution or at the very least a maintaining of the resolution as was maintained in the near-field. This allows high resolution even with a separation between the subwavelength aperture and the object that is being imaged and this has never been seen before. In addition, in terms of near-field optics the transmission efficiency of such apertures, which is a very important characteristic, is seen to increase and transmissions out of the subwavelength tip have been measured with only two orders of intensity decrease in the intensity that was injected into the fiber. Furthermore, these micropipettes would be very useful for aperturing high intensity x-ray sources.

### VIII Applications

There are many areas of applications for such devices that increase the distance of high resolution that is only normally seen in the near-field. One area is in the field of information storage where resolutions below the surface can now be as high as has previously been seen only on the surface. In addition, in the area of microchip inspection where there is a technique of chemical mechanical polishing of the microchip where important features are below the surface such tips could be useful in imaging such features. In addition, in any area of near-field optics which requires higher throughput of radiation this is an important invention. Finally, micropipettes with such structures would be very good, for example, to hold cells while measuring the electrical properties of the cells.

## Claims

1. A method for producing a subwavelength aperture (44) at a tip end (24) of a tapered or untapered optical fiber (10, 12) comprising:
coating the tip end of the fiber with metal (42), **characterised in that** said method further comprises:
directing a beam from a source (22) located at the end of, and in opposition to, said tip end onto said tip end to form an optical aperture (44) in the metal coating (42) at said tip end, said aperture having a diameter of about tens of nanometers; and
forming an asperity on said tip to produce a high resolution point.

2. The method of claim 1, wherein directing a beam includes directing a laser or ion beam.

3. The method of claim 1, wherein forming said asperity comprises growing the asperity electrochemically on said tip.

4. The method of claim 1, wherein forming said asperity comprises forming it with an ion or electron beam. The method

5. The method of anyone of claim 1-4, further including laser beam heating the fiber to form a curved cantilevered device (50) for force sensing.

6. The method of claim 5, further including forming a mirror (54) on said cantilevered device.

## Patentansprüche

1. Verfahren zur Herstellung einer Subwellenlängen-Apertur (44) am Kopfende (24) einer zugespitzten oder einer nichtzugespitzten, optischen Faser (10, 12), welches umfasst:
Beschichten des Kopfendes der Faser mit Metall (42), **gekennzeichnet dadurch, dass** das Verfahren des Weiteren umfasst:
Ausrichten eines Strahls von einer Quelle (22), die an dem Ende, gegenüberliegend zu dem genannten Kopfende und auf das Kopfende hin ausgerichtet ist, um eine optische Apertur (44) in der Metallbeschichtung (42) auf dem Kopfende ausbilden zu können, wobei die Apertur einen Durchmesser von etwa zehn Nanometern besitzt; und
Herstellen einer Oberflächenunebenheit auf dem Kopfende, um damit einem Hochauflösungspunkt zu erzeugen.

2. Verfahren gemäß Anspruch 1, wobei das Ausrichten eines Strahles das Ausrichten eines Laser- oder Ionenstrahles umfasst.

3. Verfahren gemäß Anspruch 1, wobei das Ausbilden der genannten Unebenheit mit einem elektrochemischen Erhebungsanwachsen auf dem Kopfende erfolgt.

4. Verfahren gemäß Anspruch 1, wobei das Herstellen der Unebenheit und das Ausbilden mit einem Ionen- oder Elektronenstrahl erfolgen.

5. Verfahren gemäß einem beliebigen der Ansprüche 1 - 4, welches des Weiteren das Laserstrahlerhitzen der Faser umfasst, um eine gekrümmte, freitragende Konsoleinrichtung (50) zum Kraftsensorfühlen auszubilden.

6. Verfahren gemäß Anspruch 5, welches ferner das Herstellen eines Spiegels (54) auf dieser freitragenden Konsolsensoreinrichtung umfasst.

## Revendications

1. Procédé de production d'une ouverture sub-longueur d'onde (44) au niveau d'une extrémité d'embout (24) d'une fibre optique conique ou non conique (10, 12), comprenant :
le revêtement de l'extrémité d'embout de la fibre avec un métal (42), **caractérisé en ce que** ledit procédé comprend en outre :
l'orientation d'un faisceau provenant d'une source (22) situé au niveau de l'extrémité de, et en opposition avec, ladite extrémité d'embout sur ladite extrémité d'embout afin de former une ouverture optique (44) dans le revêtement métallique (42) au niveau de ladite extrémité d'embout, ladite ouverture ayant un diamètre d'environ quelques dizaines de nanomètres ; et
la formation d'une aspérité sur ledit embout afin de produire un point à haute résolution.

2. Procédé selon la revendication 1, dans lequel l'orientation d'un faisceau inclut l'orientation d'un faisceau laser ou d'un faisceau d'ions.

3. Procédé selon la revendication 1, dans lequel la formation de ladite aspérité comprend la mise en croissance de l'aspérité électro-chimiquement sur ledit embout.

4. Procédé selon la revendication 1, dans lequel la formation de ladite aspérité comprend la formation de celle-ci avec un faisceau d'ions ou un faisceau d'électrons.

5. Procédé selon l'une quelconque des revendications 1 à 4, incluant en outre un faisceau laser chauffant la fibre pour former un dispositif incurvé en porte-à-faux (50) destiné à la détection d'une force.

6. Procédé selon la revendication 5, incluant en outre la formation d'un miroir (54) sur ledit dispositif en porte-à-faux.
